# FASCICULE DE BREVET EUROPEEN

(11) **EP 2 812 993 B1**
(45) Date de publication et mention de la délivrance du brevet: **06.07.2016**
(21) Numéro de dépôt: 13702633.2
(22) Date de dépôt: 01.02.2013
(51) Int. Cl.: B60L 11/08, H02P 29/02

(54) **SYSTÈME ET PROCÉDE DE COMMANDE DE L'ALIMENTATION D'UNE MACHINE ÉLECTRIQUE EN FONCTION DE LA TEMPÉRATURE**
SYSTEM UND VERFAHREN ZUR STEUERUNG DER STROMVERSORGUNG EINER ELEKTRISCHEN MASCHINE AUF GRUNDLAGE DER TEMPERATUR DAVON
SYSTEM AND METHOD FOR CONTROLLING THE POWER SUPPLY OF AN ELECTRIC MACHINE ON THE BASIS OF THE TEMPERATURE THEREOF

(30) Priorité: 10.02.2012 FR 1251283
(43) Date de publication de la demande: 17.12.2014
(73) Titulaire: Renault S.A.S., 92100 Boulogne-Billancourt (FR)
(72) Inventeur: NEGRE, Edouard, F-78180 Montigny le Bretonneux (FR); BAUMANN, Thibault, F-78350 Jouy en Josas (FR)
(86) Numéro de dépôt international: PCT/EP2013/052067
(87) Numéro de publication internationale: WO 2013/117500

(56) Documents cités:
- GB-A- 2 478 361
- JP-A- 1 274 685
- JP-A- 2008 187 862
- JP-A- 2010 124 610

## Description

L'invention a pour domaine technique l'alimentation des moteurs électriques, et plus particulièrement l'alimentation des moteurs électriques protégés par une limitation en puissance.

Les machines électriques comprennent généralement une partie mobile appelée rotor et une partie fixe appelée stator. Le rotor est mis en mouvement par des forces magnétiques générées par la circulation de courants dans le stator et dans le rotor. Afin de concurrencer les moteurs à combustion interne, la puissance motrice des machines électriques a été fortement augmentée ces dernières années. Cependant, la circulation des courants dans le rotor et dans le stator génère un échauffement par effet Joule. Dans le cadre de la commande des machines électriques, la température du stator et du rotor est surveillée afin de prévenir un endommagement. Au delà d'une température de seuil, la puissance est limitée afin de maintenir le rotor ou le stator en dessous de sa température d'endommagement. Ainsi, plus la température augmente au delà du seuil, plus la puissance est réduite. Toutefois, il peut arriver que seul le rotor ou le stator soit soumis à un échauffement, l'élément complémentaire demeurant en dessous de sa température de seuil. La puissance motrice de la machine électrique dépendant de la puissance circulant dans le rotor et de celle circulant dans le stator, toute diminution de l'une d'entre elles entraine une diminution de la puissance globale de la machine électrique.

Il existe un besoin pour un système de commande d'une machine électrique permettant de limiter les situations de dissymétrie de l'échauffement du rotor et du stator.

De l'état de la technique, on connaît les documents suivants.

Le document WO2009003478 enseigne la réalisation d'une limitation en puissance si la température des composants dépasse un seuil critique.

Le document US2006087789 décrit un système dans lequel on éteint le circuit de contrôle du stator si le moteur (à reluctance) chauffe au delà d'une certaine température.

Le document RU2003132783 décrit un pilotage électronique d'un refroidissement à air basé sur un ventilateur afin de refroidir des composants.

Le document US3555356 divulgue un système électronique discret permettant de réaliser une limitation en courant pour protéger des composants de la surchauffe.

Le document WO201140845 enseigne de diminuer la tension aux bornes du rotor ou le courant de rotor, lorsque la température du rotor dépasse un seuil de température.

Le document GB2478361 décrit un système de protection d'un moteur contre la surchauffe de ses composants, utilisant une limitation de la consigne de couple du moteur comme une fonction affine de la température d'un des composants du moteur, ce composant pouvant être les aimants du rotor ou les bobinages du stator.

Le document JP1274685 décrit un système de protection d'un moteur contre la surchauffe de ses composants, dans lequel on tient compte de la différence de température entre le stator et le rotor du moteur dans la détermination de la consigne de couple.

Aucun des documents cités ne permet de lutter contre la dissymétrie d'échauffement entre rotor et stator.

L'invention a pour but de réduire les écarts d'échauffement entre rotor et stator afin de retarder ou de supprimer l'entrée dans la limitation de puissance pour protéger rotor et stator de l'endommagement.

On propose un système de commande de l'alimentation d'une machine électrique équipant un véhicule automobile, le système de commande étant relié en entrée à un moyen d'estimation de la température du rotor de la machine électrique et à un capteur de température mesurant la température du stator de la machine électrique. Le système de commande comprend une première cartographie des courants optimisée pour limiter les pertes électriques, une deuxième cartographie des courants optimisée pour réduire les pertes dans le rotor et augmenter les pertes dans le stator et une troisième cartographie des courants optimisée pour augmenter les pertes dans le rotor et diminuer les pertes dans le stator, les cartographies comprenant un ensemble de valeurs permettant de déterminer des courants d'alimentation de la machine électrique en fonction des valeurs de requête de couple et de vitesse de rotation reçues en entrée du système de commande, le système de commande comprenant également un moyen de commutation apte à choisir la cartographie, dont les signaux de courants d'alimentation sont transmis à la machine électrique, en fonction des signaux du moyen d'estimation de la température du rotor et du capteur de température du stator.

Le système de commande peut comprendre un moyen de temporisation apte à retarder l'émission des signaux des cartographies ou de la troisième cartographie en fonction du signal de requête de couple. Un tel système de commande présente l'avantage d'éviter les à-coups lors d'un changement de cartographie.

On propose également un procédé de commande de l'alimentation d'une machine électrique équipant un véhicule automobile et contribuant à son déplacement, la machine électrique comprenant un rotor muni d'un moyen d'estimation de la température et un stator muni d'un capteur de température. Le procédé comprend les étapes suivantes :
on reçoit une requête de couple et une vitesse de rotation de la machine électrique,
on détermine la température du stator et la température du rotor,
on détermine l'écart entre la température du stator et la température du rotor,
on détermine au moins deux valeurs des courants d'alimentation de la machine électrique satisfaisant la requête de couple et de vitesse de rotation,
on choisit une valeur des courants d'alimentation en fonction de la température du stator et de la température du rotor, et
on émet la valeur choisie à destination de la machine électrique.

Si la température de rotor est supérieure à une valeur d'un premier seuil, et que l'écart entre la température de rotor et la température de stator est supérieure à une valeur d'un deuxième seuil, on peut choisir la valeur des courants d'alimentation de la machine électrique optimisés pour réduire les pertes dans le rotor et augmenter les pertes dans le stator.

Si la température de stator est supérieure à une valeur d'un troisième seuilS3, et que l'écart entre la température de stator et la température de rotor est supérieure à une valeur d'un quatrième seuilS4, on peut choisir la valeur des courants d'alimentation de la machine électrique optimisés pour augmenter les pertes dans le rotor et diminuer les pertes dans le stator.

Si l'écart entre la température du rotor et la température du stator est inférieur à la valeur du deuxième seuil, on peut choisir la valeur des courants d'alimentation de la machine électrique optimisée pour limiter les pertes électriques.

On peut différer l'émission des valeurs de courants d'alimentation de la machine électrique jusqu'à ce que l'on détermine que la requête de couple est inférieure à une valeur d'un cinquième seuilS5.

D'autres buts, caractéristiques et avantages apparaîtront à la lecture de la description suivante donnée uniquement en tant qu'exemple non limitatif et faite en référence aux dessins annexés sur lesquels :
- la figure 1 illustre les principaux éléments du système de commande de l'alimentation, et
- la figure 2 illustre les principales étapes du procédé de commande de l'alimentation.

Une machine électrique synchrone à rotor bobiné, produit un couple, pour une vitesse de rotation donnée, dépendant des courants de commande alimentant les phases de la machine électrique. On rappelle que le courant de rotor est noté If et que le stator est alimenté par deux courants notés Id et Iq. Il existe un grand nombre de triplets de courants (Id, Iq, If) permettant d'atteindre une valeur de couple donnée. Le triplet choisi, en mode nominal, est en général celui qui produira le moins de pertes électriques. Mais d'autres triplets peuvent êtres utilisés pour produire le même couple tout en limitant le dégagement de chaleur au niveau du rotor ou au niveau du stator.

De plus, en compensant les déséquilibres qui peuvent apparaître entre les températures du stator et du rotor, on peut éviter de déclencher une limitation de puissance due à la température (« Temperature Derating » en langue anglaise).

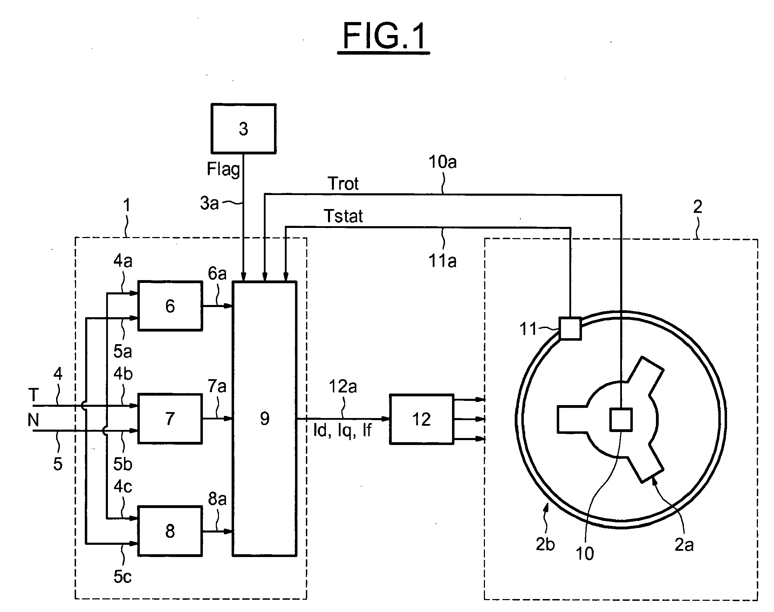

Sur la figure 1, on peut voir un système de commande 1 de l'alimentation d'une machine électrique 2 comprenant un rotor 2a et un stator 2b.

Le système de commande 1 de l'alimentation d'une machine électrique est relié en entrée à un système de commande de la puissance d'une machine électrique apte à déterminer des consignes de couple et de vitesse de rotation de ladite machine. Le système de commande 1 de l'alimentation est également relié en entrée à un moyen d'estimation 10 de la température du rotor 2a et à un capteur de température 11 mesurant la température du stator 2b.

Le système de commande 1 de l'alimentation peut également être relié à un commutateur 3.

Le système de commande 1 de l'alimentation comprend une première connexion entrante 4 portant une consigne de couple et une deuxième connexion entrante 5 portant une vitesse de rotation. Le système de commande 1 de l'alimentation comprend une première cartographie 6 des courants Id,Iq,If optimisée pour limiter les pertes électriques, une deuxième cartographie 7 des courants Id,Iq,If optimisée pour réduire les pertes dans le rotor et augmenter les pertes dans le stator et une troisième cartographie 8 des courants Id,Iq,If optimisée pour augmenter les pertes dans le rotor et diminuer les pertes dans le stator. Les cartographies comprennent un ensemble de valeurs permettant d'attribuer des courants de phases Id,Iq,If d'alimentation de la machine électrique à un couple de valeur de requête de couple T et de vitesse de rotation N.

La première cartographie est reliée en entrée à la première connexion entrante 4 par la dérivation 4a et à la deuxième connexion entrante 5 par la dérivation 5a. De même, la deuxième cartographie est reliée en entrée à la première connexion entrante 4 par la dérivation 4b et à la deuxième connexion entrante 5 par la dérivation 5b, tandis que la troisième cartographie est reliée en entrée à la première connexion entrante 4 par la dérivation 4c et à la deuxième connexion entrante 5 par la dérivation 5c.

Le système de commande 1 de l'alimentation comprend par ailleurs un moyen de commutation 9 connecté en entrée à la première cartographie 6 par la connexion 6a, à la deuxième cartographie 7 par la connexion 7a et à la troisième cartographie 8 par la connexion 8a. Le moyen de commutation 9 est relié par ailleurs en entrée au moyen d'estimation 10 par la connexion 10a et au capteur 11 par la connexion 11a. Le moyen de commutation 9 est également relié en entrée au commutateur 3 par la connexion 3a. Le commutateur 3 peut être un moyen de commande émettant un signal logique à deux états.

Le moyen de commutation 9 est relié en sortie à un moyen de commande 12 de la tension du rotor et du stator de la machine électrique par la connexion 12a.

Lors du fonctionnement, le moyen de commutation 9 met en relation la connexion 12a avec l'une ou l'autre des connexions 6a, 7a ou 8a en fonction des signaux reçus sur les connexions 10a, 10b et 3a.

Par défaut, le moyen de commutation 9 émet en sortie à destination du moyen de commande 12 de l'alimentation du rotor et du stator de la machine électrique les valeurs de courants d'alimentation des phases de la machine électrique déterminées par la première cartographie 6 en fonction de la requête de couple T et de la vitesse de rotation N reçues sur les connexions entrantes 4,5.

Dès que le moyen de commutation 9 reçoit un signal d'activation par la connexion 3a, il débute la surveillance des températures du rotor et du stator.

Le moyen de commutation 9 détermine si la température de rotor Trot reçue sur la connexion 10a est supérieure à la valeur du premier seuil S1, et que l'écart entre la température de rotor Trot et la température de stator Tstat reçue sur la connexion 11a est supérieure à un valeur d'un deuxième seuil S2, le commutateur 9 met en relation la connexion 12a avec la connexion 7a. S1S3S3S2S4S4La valeur du premier seuil, par exemple 82°C et la valeur du deuxième seuil, par exemple 30°C, sont prédéterminées et mémorisées dans le moyen de commutation 9. Ainsi, le moyen de commutation 9 émet en sortie à destination du moyen de commande 12 de l'alimentation du rotor et du stator de la machine électrique les valeurs de courants d'alimentation des phases de la machine électrique déterminées par la deuxième cartographie 7 en fonction de la requête de couple T et de la vitesse de rotation N reçues sur les connexions entrantes 4,5. Cela a pour effet de réduire le courant dans le rotor et d'augmenter le courant dans le stator. La puissance globale de la machine électrique est maintenue mais la hausse de température du rotor est ralentie ou stoppée. L'entrée en limitation de puissance est ainsi repoussée ou écartée.

Si la température de stator Tstat est supérieure à un troisième seuil S3, par exemple 96°C, et que l'écart entre la température de stator Tstat et la température de rotor Trot est supérieure à un quatrième seuil S4, par exemple 30°C, le moyen de commutation 9 met en relation la connexion 12a avec la connexion 8a. Ainsi, le moyen de commutation 9 émet en sortie à destination du moyen de commande 12 de l'alimentation du rotor et du stator de la machine électrique les valeurs de courants d'alimentation des phases de la machine électrique déterminées par la troisième cartographie 8 en fonction de la requête de couple T et de la vitesse de rotation N reçues sur les connexions entrantes 4,5. Cela a pour effet de réduire le courant dans le stator et d'augmenter le courant dans le rotor. La puissance globale de la machine électrique est maintenue mais la hausse de température du stator est ralentie ou stoppée. L'entrée en limitation de puissance est ainsi repoussée ou écartée.

Selon la structure et les performances du rotor et du stator, les valeurs du premier seuil S1 et du troisième seuil S3 présentent la même valeur ou des valeurs différentes. Il en est de même pour les valeurs du deuxième seuil S2 et du quatrième seuil S4.

Le moyen de commutation 9 peut également remettre en communication la connexion 12 avec la première cartographie 6, si les conditions d'activation de la deuxième cartographie ou de la troisième cartographie ne sont plus vérifiées.

Alternativement, il peut être prévu des seuils différents de ceux que les expressions définissant les conditions d'activation de la deuxième cartographie ou de la troisième cartographie doivent vérifier. On peut ainsi définir une hystérésis limitant les oscillations dues au passage aller ou retour entre l'utilisation de la première cartographie et l'utilisation de l'une ou l'autre de la deuxième ou troisième cartographie lorsque les valeurs issues des expressions régissant le passage entre deux cartographies sont proches des seuils. On peut par exemple considérer un écart 10°C sur les valeurs des seuils S1 à S4 afin de définir une hystérésis.

L'utilisation de la deuxième ou de la troisième cartographie implique l'utilisation de courants d'alimentation des phases de la machine électrique qui ne sont pas optimisés pour limiter les pertes électriques. Cela implique une diminution de l'autonomie du véhicule mais permet de protéger la machine électrique tout en maintenant son couple maximum atteignable. Cela est particulièrement avantageux lors d'un échauffement ponctuel.

Toutefois, si la température du rotor et la température du stator sont trop proches, le système de commande 1 de l'alimentation n'est pas activé car il aurait tendance à accélérer la rentrée en limitation de puissance du rotor ou du stator. En effet, s'il était activé le système de commande faciliterait l'augmentation de la température du rotor ou du stator, raccourcissant ainsi la durée avant l'activation de la limitation de puissance.

On peut également prévoir un changement de cartographie uniquement lorsque la requête de couple est faible pour éviter les à-coups lors des changements de mode. Ainsi, lorsque les conditions de changement de cartographie sont atteintes, celui-ci est retardé au prochain « lever » de pédale d'accélérateur. Cela est possible car la température monte si le moteur est fortement sollicité (fort couple notamment), mais n'a pas le temps de redescendre lors d'un bref levé de pied permettant de faire passer la requête de couple en dessous du seuil de couple.

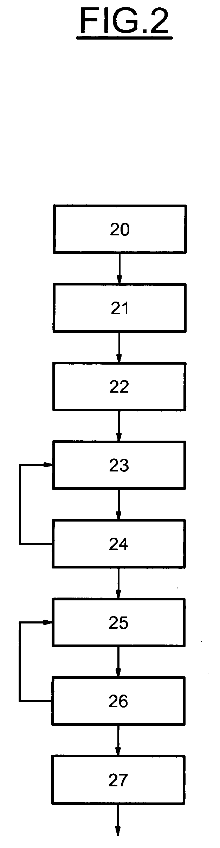

Le procédé de commande de l'alimentation du rotor et du stator d'une machine électrique illustré par la figure 2 comprend les étapes suivantes.

Au cours d'une première étape 20, on reçoit une consigne de couple T et une vitesse de rotation N de la machine électrique 2. Au cours d'une étape 21, on détermine la température du stator Tstat, la température du rotor Trot. On détermine ensuite l'écart entre la température du stator Tstat et la température du rotor Trot au cours d'une étape 22.

Au cours d'une étape 23, si la température de rotor Trot est supérieure à une deuxième valeur de seuil, et que l'écart entre la température de rotor Trot et la température de stator est supérieure à une troisième valeur de seuil, le procédé se poursuit à l'étape 24 au cours de laquelle on émet des valeurs de courants de phases d'alimentation de la machine électrique optimisés pour réduire les pertes dans le rotor et augmenter les pertes dans le stator, sinon le procédé se poursuit à l'étape 25.

Au cours d'une étape 25, si la température de stator Tstat est supérieure à la valeur du troisième seuil S3, et que l'écart entre la température de stator Tstat et la température de rotor Trot est supérieure à la valeur du quatrième seuil S4, le procédé se poursuit à l'étape 26 au cours de laquelle on émet des valeurs de courants de phases d'alimentation de la machine électrique optimisés pour augmenter les pertes dans le rotor et diminuer les pertes dans le stator, sinon le procédé se poursuit à l'étape 27.

Au cours d'une étape 27, on émet des valeurs de courants de phases d'alimentation de la machine électrique optimisés pour limiter les pertes électriques.

Le procédé se répète dès que de nouvelles valeurs sont reçues à l'étape 20 ou mesurées à l'étape 21

L'étape 25 se poursuit tant que les conditions de l'étape 24 sont vérifiées. De même, l'étape 26 se poursuit tant que les conditions de l'étape 25 sont vérifiées.

Il est également possible de passer directement de l'étape 22 à l'étape 27 si l'écart entre la température du rotor et la température du stator est inférieur à la valeur du deuxième seuil S2 et du quatrième seuil S4.

On peut également prévoir des étapes 24a et 26a, intervenant immédiatement après les étapes 24 et 26 respectivement, au cours desquelles on compare les températures de rotor et de stator et l'écart entre la température de rotor et la température de stator à des seuils différents des seuils des étapes 23 et 25 respectivement. Des seuils différents permettent de créer une hystérésis limitant les comportements oscillants.

On peut également prévoir une étape de temporisation 23a et 25a intercalées respectivement entre les étapes 23 et 24 et entre les étapes 25 et 26. Une fois les conditions des étapes 23 et 25 vérifiées, les étapes de temporisation, respectivement 23a et 25a, diffèrent l'activation des étapes 24 et 26 jusqu'à ce qu'il soit détecté que la requête de couple est inférieure à la valeur du cinquième seuil, par exemple 10Nm.

Les valeurs des seuils indiquées ci-dessus peuvent être adaptées selon la machine électrique et les systèmes de mesure et d'estimation employés (écart de température, précision des systèmes de mesure de température,..). Les plages des différents seuils peuvent être définies de la façon suivante :
La valeur du premier seuil S1 peut être comprise dans une plage variant de 40°C à 120°C, pour une température de rotor maximale de 160°C.
La valeur du deuxième seuil S2 peut être comprise dans une plage variant de 0°C à 50°C.
La valeur du troisième seuil S3 peut être comprise dans une plage variant de 50°C à 140°C, pour une température du stator maximale de 180°C.
La valeur du quatrième seuil S4 peut être comprise dans une plage variant de 0°C à 50°C.
La valeur du cinquième seuil S5 peut être comprise dans une plage variant de 0Nm à la valeur de couple maximum de la machine électrique, par exemple 220Nm.

Le système et le procédé de commande permettent de limiter les différences de températures entre le rotor et le stator d'une machine électrique afin de retarder la limitation de puissance inhérente à une augmentation trop importante de température. L'utilisation de valeurs de courants d'alimentation des phases de la machine électrique optimisant les pertes dans le rotor ou dans le stator permet de satisfaire la requête de couple du conducteur au détriment de l'autonomie dans des situations où la puissance du moteur serait normalement réduite.

## Revendications

1. Système de commande de l'alimentation d'une machine électrique équipant un véhicule automobile et contribuant à son déplacement, le système de commande (1) étant relié en entrée à un moyen d'estimation (10) de la température du rotor (2a) de la machine électrique (2) et à un capteur de température (11) mesurant la température du stator (2b) de la machine électrique (2) comprenant une première cartographie (6) des courants optimisée pour limiter les pertes électriques, **caractérisé par le fait qu'**il comprend une deuxième cartographie (7) des courants optimisée pour réduire les pertes dans le rotor et augmenter les pertes dans le stator et une troisième cartographie (8) des courants optimisée pour augmenter les pertes dans le rotor et diminuer les pertes dans le stator, les cartographies comprenant un ensemble de valeurs permettant de déterminer des courants d'alimentation de la machine électrique en fonction des valeurs de requête de couple et de vitesse de rotation reçues en entrée du système de commande,
le système de commande comprenant également un moyen de commutation (9) apte à choisir la cartographie, dont les signaux de courants d'alimentation sont transmis à la machine électrique (2), en fonction des signaux du moyen d'estimation de la température (10) du rotor et du capteur de température (11) du stator.

2. Système de commande selon la revendication 1, comprenant un moyen de temporisation apte à retarder l'émission des signaux des cartographies en fonction du signal de requête de couple.

3. Procédé de commande de l'alimentation d'une machine électrique équipant un véhicule automobile et contribuant à son déplacement, la machine électrique comprenant un rotor muni d'un moyen d'estimation de la température et un stator muni d'un capteur de température **caractérisé par le fait qu'**il comprend les étapes suivantes :
on reçoit (20) une requête de couple et une vitesse de rotation de la machine électrique,
on détermine (21) la température du stator et la température du rotor,
on détermine (22) l'écart entre la température du stator et la température du rotor,
on détermine au moins deux valeurs des courants d'alimentation de la machine électrique satisfaisant la requête de couple et de vitesse de rotation,
on choisit une valeur des courants d'alimentation en fonction de la température du stator et de la température du rotor de façon à ce que si la température de rotor est supérieure à une valeur d'un premier seuil, et que l'écart entre la température de rotor et la température de stator est supérieure à une valeur d'un deuxième seuil, on choisit la valeur des courants d'alimentation de la machine électrique optimisés pour réduire les pertes dans le rotor et augmenter les pertes dans le stator,
et on émet la valeur choisie à destination de la machine électrique.

4. Procédé selon la revendication 3, dans lequel, si la température de stator est supérieure à une valeur d'un troisième seuil, et que l'écart entre la température de stator et la température de rotor est supérieure à une valeur d'un cinquième seuil, on choisit la valeur des courants d'alimentation de la machine électrique optimisés pour augmenter les pertes dans le rotor et diminuer les pertes dans le stator.

5. Procédé selon l'une quelconque des revendications 3 ou 4, dans lequel, si l'écart entre la température du rotor et la température du stator est inférieur à la valeur du deuxième seuil, on choisit la valeur des courants d'alimentation de la machine électrique optimisée pour limiter les pertes électriques.

6. Procédé selon l'une quelconque des revendications 3 à 5, dans lequel on diffère l'émission des valeurs de courants d'alimentation de la machine électrique jusqu'à ce que l'on détermine que la requête de couple est inférieure à une valeur d'un cinquième seuil.

## Patentansprüche

1. System zur Steuerung der Versorgung einer elektrischen Maschine, mit der ein Kraftfahrzeug ausgestattet ist und die zu seiner Bewegung beiträgt, wobei das Steuersystem (1) am Eingang mit einem Mittel zur Bewertung (10) der Temperatur des Rotors (2a) der elektrischen Maschine (2) und einem Temperaturfühler (11), der die Temperatur des Stators (2b) der elektrischen Maschine (2) misst, verbunden ist, umfassend eine erste optimierte Stromkartographie (6), um die elektrischen Verluste zu begrenzen, **dadurch gekennzeichnet, dass** es eine zweite optimierte Stromkartographie (7), um die Verluste im Rotor zu verringern und die Verluste im Stator zu erhöhen, und eine dritte optimierte Stromkartographie (8), um die Verluste im Rotor zu erhöhen und die Verluste im Stator zu verringern, umfasst, wobei die Kartographien eine Gesamtheit von Werten umfassen, die es ermöglichen, Versorgungsströme der elektrischen Maschine in Abhängigkeit von den Drehmoment- und Drehgeschwindigkeitswerten, die am Eingang des Steuersystems empfangen werden, zu bestimmen,
wobei das Steuersystem auch ein Umschaltmittel (9) umfasst, das geeignet ist, die Kartographie, deren Versorgungsstromsignale auf die elektrische Maschine (2) übertragen werden, in Abhängigkeit von den Signalen des Mittels zur Bewertung der Temperatur (10) des Rotors und des Temperaturfühlers (11) des Stators zu wählen.

2. Steuersystem nach Anspruch 1, umfassend ein Verzögerungsmittel, das geeignet ist, das Senden der Signale der Kartographien in Abhängigkeit von dem Drehmomentsignal zu verzögern.

3. Verfahren zur Steuerung der Versorgung einer elektrischen Maschine, mit der ein Kraftfahrzeug ausgestattet ist und die zu seiner Bewegung beiträgt, wobei die elektrische Maschine einen Rotor, der mit einem Mittel zur Bewertung der Temperatur versehen ist, und einen Stator, der mit einem Temperaturfühler versehen ist, umfasst, **dadurch gekennzeichnet, dass** das Verfahren die folgenden Schritte umfasst:
Empfangen (20) eines Drehmoments und einer Drehgeschwindigkeit der elektrischen Maschine,
Bestimmen (21) der Temperatur des Stators und der Temperatur des Rotors,
Bestimmen (22) der Abweichung zwischen der Temperatur des Stators und der Temperatur des Rotors,
Bestimmen von mindestens zwei Versorgungsstromwerten der elektrischen Maschine, die dem Drehmoment und der Drehgeschwindigkeit entsprechen,
Auswählen eines Versorgungsstromwerts in Abhängigkeit von der Temperatur des Stators und der Temperatur des Rotors, so dass, wenn die Rotortemperatur höher als ein Wert einer ersten Schwelle ist, und die Abweichung zwischen der Rotortemperatur und der Statortemperatur größer als ein Wert einer zweiten Schwelle ist, der optimierte Versorgungsstromwert der elektrischen Maschine gewählt wird, um die Verluste im Rotor zu verringern und die Verluste im Stator zu erhöhen,
und Senden des ausgewählten Werts in Richtung der elektrischen Maschine.

4. Verfahren nach Anspruch 3, bei dem, wenn die Statortemperatur höher als ein Wert einer dritten Schwelle ist und die Abweichung zwischen der Statortemperatur und der Rotortemperatur größer als ein Wert einer fünften Schwelle ist, der optimierte Versorgungsstromwert der elektrischen Maschine ausgewählt wird, um die Verluste im Rotor zu erhöhen und die Verluste im Stator zu verringern.

5. Verfahren nach einem der Ansprüche 3 oder 4, bei dem, wenn die Abweichung zwischen der Rotortemperatur und der Statortemperatur geringer als der Wert der zweiten Schwelle ist, der optimierte Versorgungsstromwert der elektrischen Maschine ausgewählt wird, um die elektrischen Verluste zu begrenzen.

6. Verfahren nach einem der Ansprüche 3 bis 5, bei dem das Senden der Versorgungsstromwerte der elektrischen Maschine verschoben wird, bis bestimmt ist, dass das Drehmoment geringer als ein Wert einer fünften Schwelle ist.

## Claims

1. System for controlling the supply of power to an electric machine with which a motor vehicle is equipped and which contributes to the propulsion of said vehicle, the control system (1) being connected at input to an estimating means (10) for estimating the temperature of the rotor (2a) of the electric machine (2) and to a temperature sensor (11) that measures the temperature of the stator (2b) of the electric machine (2), comprising a first currents map (6) that is optimized for limiting electrical losses, **characterized in that** it comprises a second currents map (7) that is optimized for reducing losses in the rotor and increasing losses in the stator and a third currents map (8) that is optimized for increasing losses in the rotor and decreasing losses in the stator, the maps containing a set of values that make it possible to determine electric machine supply currents on the basis of the torque and rotational speed request values received at input to the control system,
the control system also comprising a switchover means (9) able to choose the map, the supply current signals of which are transmitted to the electric machine (2) on the basis of the signals from the means (10) of estimating the temperature of the rotor and from the stator temperature sensor (11).

2. Control system according to Claim 1, comprising a time-delay means able to delay the transmission of the signals from the maps on the basis of the torque request signal.

3. Method for controlling the supply of power to an electric machine with which a motor vehicle is equipped and which contributes to the propulsion of said vehicle, the electric machine comprising a rotor provided with a means of estimating the temperature and a stator provided with a temperature sensor, **characterized in that** it comprises the following steps:
an electric machine torque and rotational speed request is received (20),
the temperature of the stator and the temperature of the rotor are determined (21),
the difference between the temperature of the stator and the temperature of the rotor is determined (22),
at least two electric machine supply current values that satisfy the torque and rotational speed request are determined,
a supply current value is chosen on the basis of the temperature of the stator and of the temperature of the rotor so that if the rotor temperature is above a value of a first threshold and the difference between the rotor temperature and the stator temperature is above a value of a second threshold, the value chosen is the value from the electric machine supply currents that are optimized for reducing losses in the rotor and increasing losses in the stator,
and the chosen value is transmitted toward the electric machine.

4. Method according to Claim 3, in which, if the stator temperature is above a value of a third threshold and the difference between the stator temperature and the rotor temperature is above a value of a fifth threshold, the value chosen is the value from the electric machine supply currents that are optimized for increasing losses in the rotor and reducing losses in the stator.

5. Method according to either one of Claims 3 and 4, in which, if the difference between the rotor temperature and the stator temperature is less than the value of the second threshold, the value chosen is the value from the electric machine supply currents that are optimized for limiting electrical losses.

6. Method according to any one of Claims 3 to 5, in which the transmission of the electric machine supply current values is deferred until it has been determined that the torque request is below a value of a fifth threshold.
